# EUROPÄISCHE PATENTSCHRIFT

(11) **EP 2 365 607 B1**
(45) Veröffentlichungstag und Bekanntmachung des Hinweises auf die Patenterteilung: **11.05.2016**
(21) Anmeldenummer: 10156247.8
(22) Anmeldetag: 11.03.2010
(51) Int. Cl.: H02J 13/00

(54) **Aktive Erhöhung der Eingangsimpedanz eines Umrichters bei einer variablen Frequenz**
Active increasing of the initial impedance of a converter at variable frequency
Augmentation active de l'impédance d'entrée d'un convertisseur en cas de fréquence variable

(43) Veröffentlichungstag der Anmeldung: 14.09.2011
(73) Patentinhaber: SMA Railway Technology GmbH, 34123 Kassel (DE)
(72) Erfinder: Hermeling, Dirk, 32469 Petershagen (DE); Petschenka-Rininsland, Josef, 34125 Kassel (DE)
(74) Vertreter: Lahnor, Peter

(56) Entgegenhaltungen:
- EP-A1- 0 868 006
- ANDREAS BERGER; JOSEF PETSCHENKA; DIRK WIMMER: "Aktive Eingangsfilter durch Bordnetzumrichter" ELEKTRISCHE BAHNEN, Nr. 10, 2008, Seiten 456-460, XP001525339 ISSN: 0013-5437

## Beschreibung

### TECHNISCHES GEBIET DER ERFINDUNG

Die Erfindung betrifft ein Verfahren zur aktiven Erhöhung der Eingangsimpedanz eines Strom aus einem Netz entnehmenden Umrichters mit den Merkmalen des Oberbegriffs des unabhängigen Patentanspruchs 1 sowie einen Umrichter zur Entnahme von Strom aus einem Netz mit den Merkmalen des Oberbegriffs des unabhängigen Patentanspruchs 7. Insbesondere ist der Umrichter ein Bordnetzumrichter zur Versorgung eines Bordnetzes eines Schienenfahrzeugs aus einem Bahnnetz. Die vorliegende Erfindung ist aber auch bei anderen Umrichtern umsetzbar.

### STAND DER TECHNIK

Aus der DE-Zeitschrift eb 106 (2008) Heft 10, Seiten 456-460 "Aktive Eingangsfilter durch Bordnetzumrichter" von Andreas Berger, Josef Petschenka und Dirk Wimmer sind ein Verfahren mit den Merkmalen des Oberbegriffs des Patentanspruchs 1 und ein Bordnetzumrichter mit den Merkmalen des Oberbegriffs des unabhängigen Patentanspruchs 7 bekannt. Durch eine frequenzselektive Ausregelung von Oberschwingungen des von einem Bordnetzumrichter aufgenommenen Stroms sollen Einflüsse der Stromentnahme über den Bordnetzumrichter aus einem Bahnnetz bei der jeweiligen Frequenz minimiert werden, um beispielsweise bei dieser Frequenz durch Gleisfreimeldeanlagen auf das Bahnnetz aufmodulierte Wechselspannungssignale nicht zu stören. Einzelheiten zu dem hierfür vorgeschlagenen frequenzselektiven Regler werden jedoch nicht offenbart. Die Ausgestaltung eines solchen Reglers ist nicht trivial, da die beispielsweise von Gleisfreimeldeanlagen verwendeten Grundfrequenzen für die Signalübermittlung zwar streckenabschnittsweise konstant sind, aber doch von Strecke zu Strecke Variationen unterworfen sind. Ein frequenzselektiver Regler kann daher nicht auf eine einzige feste Frequenz eingestellt werden obwohl er zwecks Ausregelung der Wechselspannungssignale hoch empfindlich sein muss, was nur über einen kleinen Frequenzbereich möglich ist.

Aus der EP 0 868 006 A1 ist eine Kompensationsvorrichtung für ein Fernsteuerungssystem bekannt, welche ein durch eine niederohmige Last gedämpftes Rundsteuersignal stützt. Dabei ist eine Injektionsvorrichtung vorgesehen, die das gedämpfte Rundsteuersignal in einem Stromnetz detektiert und eine Steuerungskomponente zur Stützung in das Stromnetz injiziert. Diese Injektionsvorrichtung weist einen Umrichter auf.

### AUFGABE DER ERFINDUNG

Der Erfindung liegt die Aufgabe zugrunde, ein Verfahren mit den Merkmalen des Oberbegriffs des Patentanspruchs 1 und einen Umrichter mit den Merkmalen des Oberbegriffs des Patentanspruchs 7 aufzuzeigen, mit denen die Eingangsimpedanz bei einer einzelnen aber variablen Frequenz aktiv soweit erhöht werden kann, dass auch große Leistungsaufnahmen des Umrichters aus dem Netz möglich sind, ohne eine Signalübertragung über das Netz bei der Frequenz zu stören.

### LÖSUNG

Erfindungsgemäß wird die Aufgabe durch ein Verfahren mit den Merkmalen des unabhängigen Patentanspruchs 1 und einen Umrichter mit den Merkmalen des unabhängigen Patentanspruchs 7 gelöst. Bevorzugte Ausführungsformen des neuen Verfahrens sind in den abhängigen Patentansprüchen 2 bis 6 beschrieben, während die abhängigen Patentansprüche 8 bis 13 bevorzugte Ausführungsformen des neuen Umrichters betreffen.

### WEITERER STAND DER TECHNIK

Aus der Regelungstechnik ist es bekannt, für Wechselströme statt eines klassischen Pl-Reglers, der eine Phasenverschiebung verursacht und deshalb nicht einsetzbar ist, einen resonanten Integrator zu verwenden, der auch als verallgemeinerter Integrator bezeichnet wird. Ein verallgemeinerter Integrator besteht aus einem Integrator, der über einen identischen Integrator (mit gleicher Integrationszeit) zurückgekoppelt wird. Durch die Einstellung der Integrationszeit wird die Frequenz festgelegt, für die der Integrator selektiv ist. Ein verallgemeinerter Integrator kann auch als Bandpassfilter eingesetzt werden, indem man ihn zusätzlich rückkoppelt.

### BESCHREIBUNG DER ERFINDUNG

Bei dem neuen Verfahren zur aktiven Erhöhung der Eingangsimpedanz eines Strom aus einem Netz entnehmenden Umrichters wird der entnommene Strom hochpassgefiltert, um seinen Gleichstromanteil zu entfernen. Dann wird der hochpassgefilterte Strom mit einem auf die durch das Netz vorgegebene Frequenz abgestimmten Bandpassfilter bandpassgefiltert. Hierdurch wird der Anteil des Stroms im Bereich der durch das Netz vorgegebenen Frequenz, der möglichst auf null zu reduzieren ist, vorselektiert. Eine weitere Selektion wird dadurch erreicht, dass der bandpassgefilterte Strom anschließend bei einer bestimmten Frequenz selektiv integriert wird, um ein Stellsignal oder Korrektursignal für den von dem Umrichter entnommenen Strom zu generieren. Bei geeigneter Abstimmung kompensiert dieses Stellsignal die unerwünschten Variationen in der Stromentnahme bei der Frequenz des dem Bahnnetz aufmodulierten Wechselspannungssignals. Wenn diese Variationen bei dem aufgenommenen Strom unterdrückt werden, erhöht sich entsprechend die Eingangsimpedanz des Umrichters für die Wechselspannungssignale dieser Frequenz. Dies ist gleichbedeutend damit, dass der Umrichter nicht abschwächend oder störend auf diese Wechselspannungssignale auf dem Netz einwirkt. Das neue Verfahren ist dabei besonders effektiv, weil es sich selbsttätig an die aktuell durch das Netz vorgegebene Frequenz anpasst und seinen frequenzselektiven Integrator hierauf abstimmt. Dies geschieht dadurch, dass die Frequenz, bei der der bandpassgefilterte Strom selektiv integriert wird, aus dem Stellsignal selbst bestimmt wird. Mit diesem Kunstgriff werden alle Schwierigkeiten überwunden, die dabei bestehen würden, die Frequenz beispielsweise direkt aus der Spannung des Netzes oder aus dem hieraus entnommenen Strom zu bestimmen. In beiden Fällen variiert mit der interessierenden Frequenz nur ein kleiner Bruchteil der Gesamtspannung bzw. des Gesamtstroms. Bei dem mit dem Umrichter entnommenen Strom kommt hinzu, dass dieser durch seine Regelung bei der durch das Netz vorgegebenen variablen Frequenz gegen null im Idealfall überhaupt keine Anteile mehr aufweist, die von der gesuchten Frequenz abhängig sind. In dem Stellsignal ist die gesuchte Frequenz hingegen dominant, weil dieses Stellsignal im Idealfall nur aus einer einzigen Komponente mit dieser Frequenz besteht. Indem der frequenzselektive Integrator auf die Frequenz eingestellt wird, die aus dem von ihm selbst erzeugten Stellsignal bestimmt wird, ergibt sich eine fortlaufende Anpassung der Selektionsfrequenz des Integrators an die aktuell durch das Netz vorgegebene Frequenz. Bei einer Variation der durch das Netz vorgegebenen Frequenz passt sich die Frequenz des Stellsignals schnell an die neue Frequenz an. Indem die Selektionsfrequenz des frequenzselektiven Integrators entsprechend nachgeführt wird, wird der Regler auf die geänderte Frequenz abgestimmt, so dass neben der Frequenz auch die Amplitude des Stellsignals binnen kurzer Zeit zu den auszuregelnden Wechselspannungssignalen auf dem Netz passt.

Solange noch oder auch zwischenzeitlich keine Frequenz aus dem Stellsignal bestimmbar ist, wird bei dem neuen Verfahren der bandpassgefilterte Strom bei einer festen vorgegebenen Frequenz selektiv integriert. Bei dieser festen vorgegebenen Frequenz handelt es sich sinnvollerweise um die mittlere Frequenz des Frequenzbereichs der erwarteten Wechselspannungssignale auf dem Netz. Wenn also beispielsweise Wechselspannungssignale in einem Frequenzbereich von 70-80 Hz auf dem Netz zu erwarten sind, die bezüglich des aus dem Netz entnommenen Stroms ausgeregelt werden sollen, beträgt der Rückfallwert für die Einstellung der Frequenz der frequenzselektiven Integration 75 Hz.

Das Bandpassfilter, das den hochpassgefilterten Strom bandpassfiltert, kann ebenfalls auf die aus dem Stellsignal bestimmte Frequenz eingestellt werden, um seine Selektivität zu erhöhen. Genauso bietet es sich an, für das Bandpassfilter einen Rückfallwert der eingestellten Frequenz vorzusehen. Dabei kann es sich um denselben Rückfallwert wie für die frequenzselektive Integration handeln.

Grundsätzlich kann die Hochpassfilterung bei dem neuen Verfahren in das Bandpassfilter integriert werden, um eine Baueinheit einzusparen. In aller Regel ist aber der Gleichstromanteil des entnommenen Stroms viel größer als der für das vorliegende Verfahren interessierende Wechselstromanteil, so dass das Bandpassfilter viel kleiner dimensioniert und mit geringeren Toleranzen ausgebildet werden kann, wenn es nur auf einen bereits hochpassgefilterten Strom filtern muss.

Zur Umsetzung der frequenzselektiven Integration erweist sich ein grundsätzlich bekannter verallgemeinerter Integrator als vorteilhaft. Auch das Bandpassfilter kann unter Verwendung verallgemeinerter Integratoren ausgebildet werden.

Das Netz, aus dem der Umrichter den Strom entnimmt, kann, wie bereits angedeutet wurde, insbesondere ein Bahnnetz sein. Der Umrichter kann entsprechend insbesondere ein Bordnetzumrichter sein.

Der erfindungsgemäße Umrichter weist Einrichtungen zur Umsetzung des erfindungsgemäßen Verfahrens zur aktiven Erhöhung der Eingangsimpedanz des Umrichters auf, die den von dem Umrichter entnommenen Strom bei der durch das Netz vorgegebenen variablen Frequenz gegen null regeln. Dabei können über die bereits im Zusammenhang mit dem erfindunggemäßen Verfahren erläuterten Details hinaus die Einrichtungen auch für mehrere unterschiedliche durch das Netz vorgegebene variable Frequenzen vorgesehen sein, um beispielsweise verschiedene Wechselspannungssignale unterschiedlicher Frequenzen bei dem aus dem Netz entnommenen Strom jeweils gegen null zu regeln. Die Einrichtungen weisen dann jeweils einen entsprechenden Bandpassfilter, einen frequenzselektiven Integrator und eine PLL (phase-locked loop) zur Bestimmung der Frequenz des jeweiligen Stellsignals auf. Der Tiefpassfilter am Eingang der Einrichtungen kann hingegen für mehrere oder gar alle der bezüglich des aus dem Netz entnommenen Stroms auszuregelnden Frequenzen derselbe sein.

Es versteht sich, dass bei dem neuen Verfahren und dem neuen Umrichter nicht der gesamte entnommene Strom gefiltert wird, sondern nur ein Bruchteil desselben oder ein hierzu proportionales Signal, insbesondere ein hierzu proportionales Spannungssignal.

Weiterhin versteht es sich, dass der Umrichter über eine geeignete Stromregelung verfügen muss, um den aus dem Netz entnommenen Strom bei der jeweiligen Frequenz auf null reduzieren zu können. Dies ist jedoch beispielsweise bei Umrichtern mit einem eingangsseitigen, hochfrequent getakteten Hochsetzsteller oder allgemein einem eingangsseitigen, hochfrequent getakteten Synchronwandler der Fall. Es versteht sich, dass die Taktung des jeweiligen Synchronwandlers mit deutlich, d. h. mindestens etwa zehnmal höherer Frequenz zu erfolgen hat als die Frequenz der Wechselspannungssignale auf dem Netz. Beispielsweise kann die Frequenz der Taktung des Hochsetzstellers ungefähr hundertmal größer sein als die Frequenz der Wechselspannungssignale auf dem Netz. Neben der Ausregelung der Gleichspannungssignale kann der jeweilige Synchronwandler weiterhin seine Hauptaufgabe erfüllen, eine Spannungsanpassung zwischen dem Netz und der Eingangsstufe des jeweiligen Umrichters herbeizuführen.

Vorteilhafte Weiterbildungen der Erfindung ergeben sich aus den Patentansprüchen.

### KURZBESCHREIBUNG DER FIGUREN

Die Erfindung wird im Folgenden anhand eines Ausführungsbeispiels unter Bezugnahme auf die beigefügten Zeichnungen näher erläutert und beschrieben.
- **Fig. 1**: skizziert den Aufbau von Einrichtungen zur Umsetzung des Verfahrens zur aktiven Erhöhung der Eingangsimpedanz eines Strom aus einem Netz entnehmenden Umrichters; und
- **Fig. 2**: skizziert eine Ausführungsform eines Umrichters, bei dem das Verfahren zur Ansteuerung eines eingangsseitigen Hochsetzstellers zur Anwendung kommen kann.

### FIGURENBESCHREIBUNG

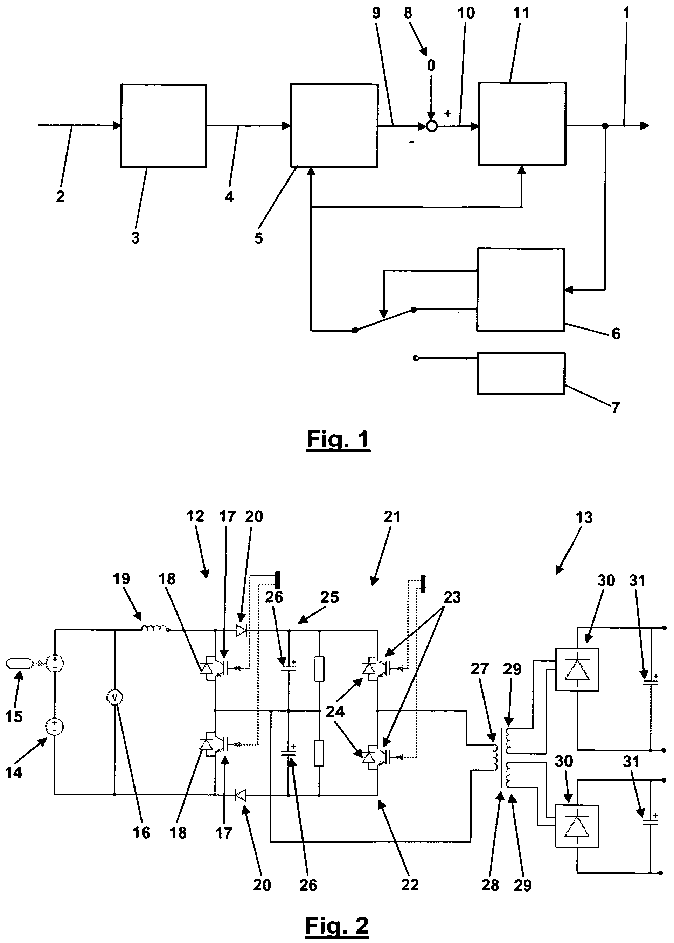

**Fig. 1** skizziert die Signalverarbeitung zur Generierung eines Stellsignals 1 aus dem Strom 2, den ein Umrichter aus einem Netz entnimmt, wobei dieser Strom 2 keine Anteile bei einer vom Netz vorgegebenen Frequenz aufweisen soll, mit der Wechselspannungssignale über das Netz übertragen werden. Das heißt, der Umrichter soll eine maximale Eingangsimpedanz bezüglich dieser Wechselspannungssignale aufweisen. Dabei kann das Netz ein Gleichstromnetz sein oder ein Wechselstromnetz. In jedem Fall wird der aus dem Netz entnommene Strom 2 zunächst mit einem Hochpassfilter 3 hochpassgefiltert, um seinen Gleichstromanteil bzw. seinen Anteil mit der Netzfrequenz zu entfernen. Der hochpassgefilterte Strom 4 wird dann mit einem Bandpassfilter 5 gefiltert. Das Bandpassfilter 5 weist eine variable Zentralfrequenz seines Bandpasses auf, die von einer PLL 6 aus dem Stellsignal 1 ermittelt und dem Bandpassfilter 5 zugeführt wird. Wenn die PLL 6 keine Frequenz aus dem Stellsignal 1 ermitteln kann, schaltet sie auf einen Speicher 7 für einen Vorgabewert für die Zentralfrequenz des Bandpassfilters 5 um. Bei diesem Vorgabewert handelt es sich um den Mittelwert des Frequenzbereichs, in dem die auf das Netz aufmodulierten Wechselspannungssignale zu erwarten sind. Anschließend erfolgt die Bildung einer Regeldifferenz zwischen einem Vorgabewert 8 von 0 und dem bandpassgefilterten Strom 9. Die resultierende Regeldifferenz 10 wird in einem frequenzselektiven Integrator 11 frequenzselektiv integriert, um das Stellsignal 1 zu generieren. Dabei wird die Frequenz, bei der der Integrator 11 selektiv integriert, ebenfalls von der PLL 6 vorgegeben. Es handelt sich um dieselbe aus dem Stellsignal 1 ermittelte Frequenz, auf die auch das Bandpassfilter 5 eingestellt wird. Der Rückfallwert der Frequenz, auf die der Integrator 11 eingestellt wird, ist ebenfalls der in dem Speicher 7 abgespeicherte mittlere Wert des Frequenzbandes, in dem die Wechselspannungssignale auf dem Netz zu erwarten sind. Das Stellsignal 1 wächst infolge seiner Integration in dem frequenzselektiven Integrator 11 solange an, bis der mittels des Umrichters dem Netz entnommene Strom 2 keine Variationen bei der Frequenz mehr aufweist. Damit wäre die Frequenz der dem Netz aufmodulierten Wechselspannungssignale aus dem Strom 2 nicht mehr ermittelbar. Sie liegt aber noch bei dem Stellsignal 1 vor und kann hieraus ermittelt werden, um sowohl das Bandpassfilter 5 als auch den frequenzselektiven Integrator 11 optimal einzustellen. Diese optimale Einstellung ist erforderlich, um das Stellsignal angesichts der nur kleinen Schwankungen der Eingangsspannung mit den aufmodulierten Wechselspannungssignalen und den resultierenden potentiellen kleinen Schwankungen des entnommenen Stroms 2 stabil in ausreichender Größe bereitzustellen.

Das Stellsignal 1 wirkt beispielsweise auf die Ansteuerung eines eingangsseitigen Hochsetzstellers 12 eines in **Fig. 2** skizzierten Umrichters 13 ein. Der Umrichter 13 ist hier zur Entnahme von Strom und damit elektrischer Leistung aus einem Gleichspannungsnetz 14 vorgesehen, dem Wechselspannungssignale 15 einer Frequenz im Bereich von 70-80 Hz aufmoduliert sind. Eine Spannungsmesseinrichtung 16 zur Messung der Eingangsspannung des Umrichters dient dazu, die Gleichspannung des Netzes 14 zu erfassen, und berücksichtigt die aufmodulierten Wechselspannungssignale 15 nicht. Das Ausgangssignal der Spannungsmesseinrichtung 16 wird ebenso wie das Stellsignal 1 gemäß Fig. 1 bei der Ansteuerung von zwei Schaltern 17 mit integrierten antiparallelen Dioden 18 des Hochsetzstellers 12 berücksichtigt. Der Hochsetzsteller 12 weist weiterhin eine Induktivität 19 und Dioden 20 auf. Dem Hochsetzsteller 12 ist ein Wechselrichter 21 nachgeschaltet, der eine Halbbrücke 22 aus zwei Schaltern 23 mit antiparallelen Dioden 24 und einen geteilten eingangsseitigen Zwischenkreis 25 mit zwei Kapazitäten 26 aufweist. Der Wechselrichter 21 speist eine Primärwicklung 27 eines Transformators 28. Der in zwei Sekundärwicklungen 29 des Transformators 28 induzierte Strom wird von Gleichrichtern 30 gleichgerichtet, denen Pufferkondensatoren 31 nachgeschaltet sind, um zwei Kreise eines Bordnetzes zu versorgen. Während die Schalter 23 des Wechselrichters 21 resonant geschaltet werden, um die Primärwicklung 27 des Transformators 28, der eine galvanischer Trennung bereitstellt, zu speisen, werden die Schalter 17 des Hochsetzstellers 12 hart geschaltet, um einerseits eine Anpassung zwischen der Gleichspannung des Netzes 14 und dem Wechselrichter 21 herbeizuführen und um andererseits den von dem Umrichter 13 aufgenommen Strom zu formen. Im vorliegenden Fall ist dieser Strom idealerweise ein konstanter Gleichstrom. Bei einem Wechselspannungsnetz hingegen wäre er ein idealer Sinusstrom mit der Netzfrequenz. Das heißt, der von dem Umrichter 21 aufgenommene Strom bleibt durch die aufmodulierten Wechselspannungssignale 15 möglichst unbeeinflusst. Da sich diese Wechselspannungssignale 15 aber auf die Eingangsspannung des Umrichters 13 auswirken und so potentiell den von ihm aus dem Netz 14 entnommenen Strom beeinflussen, müssen sie bei dem Umrichter 13 ausgeregelt werden. Hierzu dient das Stellsignal 1 gemäß Fig. 1, das bei der Ansteuerung der Schalter 17 des Hochsetzstellers 12 Berücksichtigung findet. Dabei erfolgte eine Taktung der Schalter 17 mit einer deutlich über der Frequenz der Wechselspannungssignale 15 liegenden Frequenz, hier beispielsweise von 7 kHz, also etwa dem Hundertfachen der Frequenz der Wechselspannungssignale 15 von 70-80 Hz.

**BEZUGSZEICHENLISTE**

| | | | |
|---|---|---|---|
| 1 | Stellsignal | 31 | Pufferkapazität |
| 2 | entnommener Strom | | |
| 3 | Hochpassfilter | | |
| 4 | hochpassgefilterter Strom | | |
| 5 | Bandpassfilter | | |
| 6 | PLL | | |
| 7 | Speicher | | |
| 8 | Vorgabewert | | |
| 9 | bandpassgefilterter Strom | | |
| 10 | Differenz | | |
| 11 | frequenzselektiver Integrator | | |
| 12 | Hochsetzsteller | | |
| 13 | Umrichter | | |
| 14 | Netz | | |
| 15 | Wechselspannungssignal | | |
| 16 | Spannungsmesseinrichtung | | |
| 17 | Schalter | | |
| 18 | Diode | | |
| 19 | Induktivität | | |
| 20 | Diode | | |
| 21 | Wechselrichter | | |
| 22 | Halbbrücke | | |
| 23 | Schalter | | |
| 24 | Diode | | |
| 25 | Zwischenkreis | | |
| 26 | Kapazität | | |
| 27 | Primärwicklung | | |
| 28 | Transformator | | |
| 29 | Sekundärwicklung | | |
| 30 | Gleichrichter | | |

## Patentansprüche

1. Verfahren zur aktiven Erhöhung der Eingangsimpedanz eines Strom aus einem Gleichstromnetz (14) oder aus einem Wechselstromnetz mit fester Netzfrequenz entnehmenden Umrichters (13), **dadurch gekennzeichnet, dass** der von dem Umrichter (13) entnommene Strom (2) bei einer durch das Netz (14) vorgegebenen variablen Frequenz gegen null geregelt wird, dass der entnommene Strom (2) hochpassgefiltert wird, um seinen Gleichstromanteil oder seinen Anteil mit der Netzfrequenz zu entfernen, dass der hochpassgefilterte Strom (4) mit einem auf die durch das Netz (14) vorgegebene Frequenz abgestimmten Bandpassfilter (5) bandpassgefiltert wird, dass der bandpassgefilterte Strom (9) bei einer bestimmten Frequenz selektiv integriert wird, um ein Stellsignal (1) für den von dem Umrichter (13) entnommenen Strom (2) zu generieren, und dass die Frequenz, bei der der bandpassgefilterte Strom (9) selektiv integriert wird,
- dann, wenn eine Frequenz aus dem Stellsignal (1) bestimmbar ist, aus dem Stellsignal (1) bestimmt wird, und
- dann, wenn keine Frequenz aus dem Stellsignal (1) bestimmbar ist, fest vorgegeben wird.

2. Verfahren nach Anspruch 1, **dadurch gekennzeichnet, dass** der hochpassgefilterte Strom (4) mit einem Bandpassfilter (5) bandpassgefiltert wird, das auf die aus dem Stellsignal (1) bestimmte Frequenz eingestellt wird.

3. Verfahren nach Anspruch 1 und 2, **dadurch gekennzeichnet, dass** dann, wenn keine Frequenz aus dem Stellsignal (1) bestimmbar ist, das Bandpassfilter (5) auf die fest vorgegebene Frequenz eingestellt wird.

4. Verfahren nach mindestens einem der vorhergehenden Ansprüche, **dadurch gekennzeichnet, dass** der bandpassgefilterte Strom (9) mit einem verallgemeinerten Integrator integriert wird.

5. Verfahren nach mindestens einem der vorhergehenden Ansprüche, **dadurch gekennzeichnet, dass** der hochpassgefilterte Strom (4) mit einem verallgemeinerten Integrator als Bandpassfilter (5) bandpassgefiltert wird.

6. Verfahren nach mindestens einem der vorhergehenden Ansprüche, **dadurch gekennzeichnet, dass** das Netz (14) ein Bahnnetz und der Umrichter (13) ein Bordnetzumrichter ist.

7. Umrichter (13) zur Entnahme von Strom aus einem Gleichstromnetz (14) oder einem Wechselstromnetz mit fester Netzfrequenz, mit Einrichtungen zur aktiven Erhöhung der Eingangsimpedanz des Umrichters (13), die den von dem Umrichter (13) entnommenen Strom bei einer durch das Netz (14) vorgegebenen variablen Frequenz gegen null regeln, **dadurch gekennzeichnet, dass** die Einrichtungen ein Hochpassfilter (3), das den entnommenen Strom (2) hochpassfiltert, um seinen Gleichstromanteil oder seinen Anteil mit der Netzfrequenz zu entfernen, ein Bandpassfilter (5), das auf die durch das Netz vorgegebene Frequenz abgestimmt ist und das den hochpassgefilterten Strom (4) bandpassfiltert, einen frequenzselektiven Integrator (11), der den bandpassgefilterten Strom (9) bei einer bestimmten Frequenz integriert, um ein Stellsignal (1) für den von dem Umrichter (13) entnommenen Strom (2) zu generieren, und eine PLL (6) umfassen, die dann, wenn eine Frequenz aus dem Stellsignal (1) bestimmbar ist, die Frequenz, bei der der frequenzselektive Integrator (11) integriert, aus dem Stellsignal (1) bestimmt, während die Einrichtungen dann, wenn die PLL (6) keine Frequenz aus dem Stellsignal (1) bestimmt, die Frequenz, bei der der frequenzselektive Integrator (11) integriert, auf eine feste vorgegebene Frequenz festlegen.

8. Umrichter (13) nach Anspruch 7, **dadurch gekennzeichnet, dass** die Einrichtungen das Bandpassfilter (5) auf die aus dem Stellsignal (1) bestimmte Frequenz einstellen.

9. Umrichter (13) nach Anspruch 7 und 8, **dadurch gekennzeichnet, dass** die Einrichtungen dann, wenn die PLL (6) keine Frequenz aus dem Stellsignal (1) bestimmt, das Bandpassfilter (5) auf die feste vorgegebene Frequenz einstellen.

10. Umrichter (13) nach mindestens einem der vorhergehenden Ansprüche, **dadurch gekennzeichnet, dass** der frequenzselektive Integrator (11) einen verallgemeinerten Integrator aufweist.

11. Umrichter (13) nach mindestens einem der vorhergehenden Ansprüche, **dadurch gekennzeichnet, dass** das Bandpassfilter (5) einen verallgemeinerten Integrator aufweist.

12. Umrichter (13) nach mindestens einem der vorhergehenden Ansprüche, **dadurch gekennzeichnet, dass** mehrere Einrichtungen mit jeweils einem Bandpassfilter (5), einem frequenzselektiven Integrator (11) und einer PLL (6) vorgesehen sind, um die Eingangsimpedanz des Umrichters (13) bei mehreren durch das Netz (14) vorgegebenen variablen Frequenzen gegen null zu regeln.

13. Umrichter (13) nach mindestens einem der vorhergehenden Ansprüche, **dadurch gekennzeichnet, dass** das Netz (14) ein Bahnnetz und der Umrichter (13) ein Bordnetzumrichter ist.

## Claims

1. Method for actively increasing the input impedance of a converter (13) which draws current from a DC network (14) or from an AC network with a fixed network frequency, **characterized in that** the current (2) drawn by the converter (13) is regulated to zero at a variable frequency predefined by the network (14), **in that** the current (2) drawn is subjected to high-pass filtering in order to remove its DC component or its component at the network frequency, **in that** the high-pass-filtered current (4) is subjected to bandpass filtering using a bandpass filter (5) tuned to the frequency predefined by the network (14), **in that** the bandpass-filtered current (9) is selectively integrated at a particular frequency in order to generate a control signal (1) for the current (2) drawn by the converter (13), and **in that** the frequency at which the bandpass-filtered current (9) is selectively integrated
- is determined from the control signal (1) when a frequency can be determined from the control signal (1), and
- is fixedly predefined when a frequency cannot be determined from the control signal (1).

2. Method according to Claim 1, **characterized in that** the high-pass-filtered current (4) is subjected to bandpass filtering using a bandpass filter (5) which is set to the frequency determined from the control signal (1).

3. Method according to Claims 1 and 2, **characterized in that** the bandpass filter (5) is set to the fixedly predefined frequency when a frequency cannot be determined from the control signal (1).

4. Method according to at least one of the preceding claims, **characterized in that** the bandpass-filtered current (9) is integrated using a generalized integrator.

5. Method according to at least one of the preceding claims, **characterized in that** the high-pass-filtered current (4) is subjected to bandpass filtering using a generalized integrator as the bandpass filter (5).

6. Method according to at least one of the preceding claims, **characterized in that** the network (14) is a railway network and the converter (13) is an on-board converter.

7. Converter (13) for drawing current from a DC network (14) or an AC network with a fixed network frequency, having devices for actively increasing the input impedance of the converter (13), which devices regulate the current drawn by the converter (13) to zero at a variable frequency predefined by the network (14), **characterized in that** the devices comprise a high-pass filter (3) which subjects the current (2) drawn to high-pass filtering in order to remove its DC component or its component at the network frequency, a bandpass filter (5) which is tuned to the frequency predefined by the network and subjects the high-pass-filtered current (4) to bandpass filtering, a frequency-selective integrator (11) which integrates the bandpass-filtered current (9) at a particular frequency in order to generate a control signal (1) for the current (2) drawn by the converter (13), and a PLL (6) which determines the frequency at which the frequency-selective integrator (11) integrates from the control signal (1) when a frequency can be determined from the control signal (1), whereas the devices set the frequency at which the frequency-selective integrator (11) integrates to a fixed predefined frequency when the PLL (6) does not determine a frequency from the control signal (1).

8. Converter (13) according to Claim 7, **characterized in that** the devices set the bandpass filter (5) to the frequency determined from the control signal (1).

9. Converter (13) according to Claims 7 and 8, **characterized in that** the devices set the bandpass filter (5) to the fixed predefined frequency when the PLL (6) does not determine a frequency from the control signal (1).

10. Converter (13) according to at least one of the preceding claims, **characterized in that** the frequency-selective integrator (11) has a generalized integrator.

11. Converter (13) according to at least one of the preceding claims, **characterized in that** the bandpass filter (5) has a generalized integrator.

12. Converter (13) according to at least one of the preceding claims, **characterized in that** a plurality of devices each with a bandpass filter (5), a frequency-selective integrator (11) and a PLL (6) are provided in order to regulate the input impedance of the converter (13) to zero at a plurality of variable frequencies predefined by the network (14).

13. Converter (13) according to at least one of the preceding claims, **characterized in that** the network (14) is a railway network and the converter (13) is an on-board converter.

## Revendications

1. Procédé pour l'augmentation active de l'impédance d'entrée d'un convertisseur (13) prélevant du courant à partir d'un réseau de courant continu (14) ou d'un réseau de courant alternatif avec une fréquence fixe de réseau,
**caractérisé en ce que** le courant (2) prélevé par le convertisseur (13) est réglé vers zéro à une fréquence variable prescrite par le réseau (14), **en ce que** le courant prélevé (2) est soumis à un filtrage passe-haut afin d'éliminer sa composante de courant continu ou sa composante avec la fréquence de réseau, **en ce que** le courant (4) ayant été soumis au filtrage passe-haut est soumis à un filtrage passe-bande avec un filtre passe-bande (5) ajusté à la fréquence prescrite par le réseau (14), **en ce que** le courant (9) ayant été soumis au filtrage passe-bande est intégré sélectivement à une fréquence déterminée pour générer un signal de réglage (1) pour le courant (2) prélevé par le convertisseur (13), et **en ce que** la fréquence à laquelle le courant (9) ayant été soumis à un filtrage passe-bande est intégré sélectivement
- est déterminée à partir du signal de réglage (1) lorsqu'une fréquence peut être déterminée à partir du signal de réglage (1), et
- est prescrite de manière fixe lorsqu'aucune fréquence ne peut être déterminée à partir du signal de réglage (1).

2. Procédé selon la revendication 1, **caractérisé en ce que** le courant (4) ayant été soumis à un filtrage passe-haut est soumis à un filtrage passe-bande avec un filtre passe- bande (5) qui est réglé à la fréquence déterminée à partir du signal de réglage (1).

3. Procédé selon les revendications 1 et 2, **caractérisé en ce que**, lorsqu'aucune fréquence ne peut être déterminée à partir du signal de réglage (1), le filtre passe-bande (5) est réglé à la fréquence prescrite de manière fixe.

4. Procédé selon l'une au moins des revendications précédentes, **caractérisé en ce que** le courant (9) ayant été soumis au filtrage passe-bande est intégré avec un intégrateur généralisé.

5. Procédé selon l'une au moins des revendications précédentes, **caractérisé en ce que** le courant (4) ayant été soumis à un filtrage passe-haut est soumis à un filtrage passe-bande avec un intégrateur généralisé en tant que filtre passe-bande (5).

6. Procédé selon l'une au moins des revendications précédentes, **caractérisé en ce que** le réseau (14) est un réseau de chemin de fer et le convertisseur (13), un convertisseur de réseau de bord.

7. Convertisseur (13) pour le prélèvement de courant à partir d'un réseau de courant continu (14) ou d'un réseau de courant alternatif avec une fréquence de réseau fixe, avec des dispositifs pour l'augmentation active de l'impédance d'entrée du convertisseur (13), lesquels règlent vers zéro le courant prélevé par le convertisseur (13) avec une fréquence variable prescrite par le réseau (14),
**caractérisé en ce que** les dispositifs comprennent un filtre passe-haut (3) qui soumet à un filtrage passe-haut le courant (2) prélevé pour éliminer sa composante de courant continu ou sa composante avec la fréquence de réseau, un filtre passe-bande (5) qui est ajusté à la fréquence prescrite par le réseau et qui soumet à un filtrage passe-bande le courant (4) ayant été soumis au filtrage passe-haut, un intégrateur sélectif en fréquence (11) qui intègre le courant (9) ayant été soumis au filtrage passe-bande avec une fréquence déterminée pour générer un signal de réglage (1) pour le courant (2) prélevé par le convertisseur (13), et une PLL (6) laquelle, lorsqu'une fréquence peut être déterminée à partir du signal de réglage (1), détermine la fréquence à laquelle l'intégrateur sélectif en fréquence (11) intègre à partir du signal de réglage (1) alors que, lorsque la PLL (6) ne détermine pas de fréquence à partir du signal de réglage (1), les dispositifs fixent la fréquence à laquelle l'intégrateur sélectif en fréquence (11) intègre à une fréquence prescrite de manière fixe.

8. Convertisseur (13) selon la revendication 7, **caractérisé en ce que** les dispositifs règlent le filtre passe-bande (5) à la fréquence déterminée à partir du signal de réglage (1).

9. Convertisseur (13) selon les revendications 7 et 8, **caractérisé en ce que**, lorsque la PLL (6) ne détermine pas de fréquence à partir du signal de réglage (1), les dispositifs règlent le filtre passe-bande (5) à la fréquence prescrite de manière fixe.

10. Convertisseur (13) selon l'une au moins des revendications précédentes, **caractérisé en ce que** l'intégrateur sélectif en fréquence (11) présente un intégrateur généralisé.

11. Convertisseur (13) selon l'une au moins des revendications précédentes, **caractérisé en ce que** le filtre passe-bande (5) présente un intégrateur généralisé.

12. Convertisseur (13) selon l'une au moins des revendications précédentes, **caractérisé en ce que** l'on prévoit plusieurs dispositifs avec respectivement un filtre passe-bande (5), un intégrateur sélectif en fréquence (11) et une PLL (6) pour régler vers zéro l'impédance d'entrée du convertisseur (13) à plusieurs fréquences variables prescrites par le réseau (14).

13. Convertisseur (13) selon l'une au moins des revendications précédentes, **caractérisé en ce que** le réseau (14) est un réseau de chemin de fer et le convertisseur (13), un convertisseur de réseau de bord.
